Europäisches Patentamt

(19) European Patent Office

Office européen des brevets

(11) Publication number: 0 076 013
B1

(12) EUROPEAN PATENT SPECIFICATION

(45) Date of publication of patent specification: 28.05.86

(51) Int. Cl.⁴: C 08 L 25/12

(21) Application number: 82201201.9

(22) Date of filing: 24.09.82

(54) Polymer composition.

(30) Priority: 25.09.81 NL 8104413

(43) Date of publication of application:
06.04.83 Bulletin 83/14

(45) Publication of the grant of the patent:
28.05.86 Bulletin 86/22

(84) Designated Contracting States:
AT BE CH DE FR GB IT LI NL SE

(56) References cited:
EP-A-0 037 608
EP-A-0 037 609

DERWENT CHEMICAL PUBLICATIONS, vol. 7,
no. 5, section 1, page 6, 11th March 1968,
London (GB);

(73) Proprietor: STAMICARBON B.V.
Mijnweg 1
NL-6167 AC Geleen (NL)

(72) Inventor: Schepers, Herman Augustinus
Johannes
Leentstraat 33
NL-6171 LC Stein (NL)
Inventor: Debets, Wilhelmus Antonius Marie
Dr. Philipsstraat 91
NL-6136 XX Sittard (NL)

(74) Representative: Hatzmann, Marinus Jan et al
OCTROOIBUREAU DSM P.O.Box 9
NL-6160 MA Geleen (NL)

Courier Press, Leamington Spa, England.

## Description

The invention relates to an impact-resistant polymer composition on the basis of a copolymer of an unsaturated nitrile, a substantially saturated rubber and a chlorinated polyethylene.

In general, an impact-resistant polymer composition on the basis of an unsaturated nitrile contains a graft polymer consisting of a rubber with one or more monomers grafted onto it, such as styrene, α-methylstyrene, acrylonitrile, vinyl chloride, maleic anhydride and/or one or more acrylates. A typical example of such a polymer composition is ABS (copolymer of styrene and acrylonitrile grafted onto a (butadiene) rubber). Thanks to the fact that part of the monomers forming the continuous phase (matrix) of the polymer composition is grafted onto the rubber, these compositions have a high impact resistance, especially at low temperatures (−20°C).

As rubber, use is often made of polybutadiene or a related rubber. These rubbers are highly unsaturated in their main chain, which makes them sensitive to oxidation when exposed to light and/or molecular oxygen. As a result, the physical and mechanical properties of objects made of such polymer compositions strongly deteriorate, so that they cannot be used as such in outdoor applications.

To solve this problem it has been proposed to replace the rubber in the polymer composition by a substantially saturated rubber, such as an ethylene-propylene or an ethylene-propylene-diene rubber. Reference is made to, for instance, the US patent specifications No. 3,886,233 or 4,202,948.

In this way a polymer composition is obtained which combines good impact resistance with good UV stability.

A disadvantage, however, is that these graft copolymers have a rather poor flow behaviour, so that the speed of processing is low and, especially when producing intricate objects, problems may arise with respect to mould filling. Compared with polymer mixtures, these graft copolymers necessitate a rather complicated production process.

The Japanese patent disclosure 3016/68 describes a polymer composition consisting of a styrene-acrylonitrile copolymer, chlorinated polyethylene and butyl rubber. From the text it appears that the chlorinated polyethylene is a homogeneous chlorinated polyethylene having a high density. Of this polymer composition particularly the impact resistance is low.

From the US patent specification 3,819,763 it is known that mixtures of chlorinated polyethylene, ethylene-propylene-diene rubber and a styrene-acrylonitrile copolymer have a low impact resistance.

In the co-pending European patent applications 37,608 and 37,609 polymer compositions are described in which, to improve the impact resistance, use is made of a chlorinated polyethylene characterized by a combination of a certain chlorine content, a DSC crystallinity and optionally a glass transition temperature.

The polymer composition according to the invention is characterized in that the polymer composition comprises:

a. 30—95 parts by weight of one or more polymers obtained by polymerizing a mixture of
10—90 wt.% styrene and/or styrene derivatives, and
90—10 wt.% acrylonitrile and/or methacrylonitrile and
b. 5—70 parts by weight of
b.1. a substantially saturated rubber, and
b.2. chlorinated polyethylene with a chlorine content of between 32 and 45 wt.%, a DSC crystallinity of 0—7% and an intrinsic viscosity of at least 1.0, the weight ratio between rubber and chlorinated polyethylene being between 2:1 and 1:10.

The intrinsic viscosity of the chlorinated polyethylene is by preference between 1.2 and 3.5.

Surprisingly, it has been found that such a polymer composition, in which a graft copolymer is not, but a specific chlorinated polyethylene is included, does not only have a good flow behaviour and UV stability, but also a very good impact resistance (even at a low temperature). Measurements of the applicant have shown the flow behaviour of the polymer composition to be comparable with the flow behaviour of ABS.

It is particularly surprising that the impact resistance is high, for polymer compositions on the basis of a copolymer of an unsaturated nitrile and chlorinated polyethylene, respectively on the basis of this copolymer and a substantially saturated rubber, or on the basis of the three components mentioned but with a chlorinated polyethylene not meeting the requirements as regards intrinsic viscosity, exhibit hardly any impact resistance.

It is particularly surprising, and on the basis of the state of the art it could not be expected, that it should be possible to produce polymer compositions with a very good impact resistance by using as chlorinated polyethylene a product having a high intrinsic viscosity.

It has been found that, when applying a chlorinated polyethylene having an intrinsic viscosity in excess of 1.0, a polymer composition is obtained that has a considerably higher impact resistance than on the basis of a comparable chlorinated polyethylene having a low viscosity.

It has also been found that the application of such high-molecular products, quite unexpectedly, has no or hardly any adverse effect on the processability of the polymer composition.

An additional advantage of the polymer composition according to the invention is that the ratio between rubber, chlorinated polyethylene and copolymer of an unsaturated nitrile can be varied within

2

wide limits. This means that there is very great freedom in preparing polymer compositions having a broad range of properties such as rigidity, heat distortion temperature (Vicat, HDT), impact strength, burning characteristics, gloss, in-mould shrinkage, flow behaviour and processability, of the resultant mixtures, without there being any need to modify the preparation of any of the components, as has to be done for preparation of the known products on the basis of a graft copolymer.

Suitable as rubber-like, substantially saturated polymers are rubbers that are not or little unsaturated in their main chain, i.e. that contain less than 2 and preferably less than 1.5 double bonds per 100 carbon atoms. In their side chains the rubbers may be unsaturated, which may be utilized for instance for cross-linking.

Rubbers that are particularly suited for application in the process according to the invention are ethylene-propylene copolymers (the so-called EP rubbers), butyl rubber, chloro-butyl rubber, acrylate rubber and ethylene-propylene copolymers containing copolymerized other polyunsaturated monomers (the so-called EPT rubbers), or mixtures of two or more of these rubbers. Examples of these polyunsaturated monomers are hexadiene-1,4, dicyclopentadiene, tricyclopentadiene, 5-vinyl norbornene-2, 5 - ethylidene - norbornene - 2, 5 - methylene - norbornene - 2, 5 - (2 - propenyl)norbornene - 2, 5 - (5 - hexenyl)norbornene - 2, 4, 7, 8, 9 - tetrahydroindene and isopropylidene - tetrahydroindene.

As it is not essential for the polymer composition to be vulcanized, there is no need to use polyunsaturated monomers. Hence it may be economically advantageous to apply ethylene-propylene rubber in the polymer composition.

In certain cases it may be advantageous to crosslink all or part of the rubber. This can be done in the usual way, for instance by means of peroxides or by using chemically modified rubber.

The chlorinated polyethylene or a mixture of two or more chlorinated polyethylenes suitable for application in the polymer compositions according to the invention can be prepared in a way known in the art by chlorinating polyethylene in solution, in suspension or in the gas phase. Reference is made to, for instance, the US patents No. 3,935,181 and 4,197,386. The starting material then preferably is high-density polyethylene, that is, polyethylene having a density of between 935 and 965 kg/m$^3$, which can be made using a catalyst on the basis of transition metals.

Cross-linking of all of part of the chlorinated polyethylene to be applied is possible, for instance with the aid of a diamine.

The crystallinity is determined by placing a sample in a differential scanning calorimeter, keeping it there for 5 minutes at +150°C, subsequently cooling it to +50°C, the cooling rate being 5°C per minute, and then reheating it to +150°C at a rate of 5°C per minute. During the reheating, the melting heat is measured. The crystallinity is determined using the following formula:

$$\text{crystallinity (\%)} = \frac{\text{melting heat measured (J/g)}}{\substack{\text{theoretical melting heat of} \\ \text{100\% crystalline polyethylene (J/g)}}} \times 100\%$$

The glass transition temperature can with advantage be lower than or equal to +5°C. The lower limit is not critical. In practice, the lower limit of the glass transition temperature of the chlorinated polyethylene will be dictated by the requirements to be satisfied as regards crystallinity and chlorine content. This limit is at about −35°C.

Glass transition temperature is here understood to mean the temperature at which the maximum in the damping (G″, loss modulus) is obtained that is characteristic of the type of chlorinated-polyethylene and that is measured using a torsion-damping meter at a frequency of 0.2153 Hz and a heating rate of 1°C per minute.

In this context it should be remarked that chlorinated polyethylene usually has two transition temperatures. One transition temperature lies in the region of −120°C. The other transition temperature lies at a higher value and varies with the way the chlorinated polyethylene is prepared. This latter transition temperature is generally referred to in literature when the glass transition temperature of chlorinated polyethylene is discussed. Therefore, it is this latter temperature which is given as the glass transition temperature of chlorinated polyethylene in the present patent application.

The intrinsic viscosity is determined by dissolving the chlorinated polyethylene in trichlorobenzene and determining in a known way, at 135°C, the intrinsic viscosity.

The preparation of the copolymer of an unsaturated nitrile can take place in a continuous or in a batch process, while known polymerization techniques, such as emulsion, suspension, solution and mass polymerization, or by methods combining such techniques, are suitable.

As copolymer, the various copolymers on the basis of styrene or its derivatives can be applied.

Examples of copolymers that may be used are styrene-acrylonitrile copolymer, α-methylstyrene-acrylonitrile copolymer, styrene- or α-methylstyrene-acrylonitrile-maleic anhydride terpolymer and styrene-α-methylstyrene-acrylonitrile terpolymer, as well as copolymers of acrylonitrile with halogenated styrene, or mixtures of two or more of said polymers. Furthermore it is possible to replace all or part of the acrylonitrile by one or more other monomers such as maleic anhydride or a methacrylate.

The weight ratio between the chlorinated polyethylene and the rubber by preference is between 1:20 and 20:1. Within these limits a polymer composition is obtained that has a particularly good impact resistance, also at low temperature (−20°C).

More in particular, the weight ratio between the chlorinated polyethylene and the rubber is between 1:2 and 10:1. Within these limits a polymer composition is obtained that has an extremely good impact resistance, also at low temperature (−20°C).

Optimum properties are obtained if the weight ratio between this chlorinated polyethylene and substantially saturated rubber is between 1:1 and 4:1.

The polymer composition according to the invention can be made in a known way from the various basic materials using methods usually employed for this purpose. Depending on the form in which the basic materials are available (powder, crumb, liquid), various devices or combinations thereof may be used, such as a high-speed mixer, a Banbury mixer, a kneader-extruder and the like.

Since impact-resistant polymer compositions are supplied by producers mainly in granulate form, the polymer composition will generally be granulated using an extruder after the basic materials have been mixed. Mixing can also take place in this extruder.

The polymer composition according to the invention by preference consists of:

a. 30—94.99 wt.% styrene-acrylonitrile copolymer and/or α-methylstyrene-acrylonitrile copolymer,
b.1. 2.5—35 wt.% ethylene-propylene or ethylene-propylene-diene rubber,
b.2. 2.5—35 wt.% chlorinated polyethylene,
c. 0.01—10 wt.% additives.

To the polymer composition one or more of the usual additives such as anti-oxidants, antistatic agents, lubricants, (reinforcing) fillers, colourants, pigments, UV stabilizers, fungicides, hydrogen-chloride binders, metal-deactivators, flame-retarding metal compounds, etc. may be added. There is advantage in adding one or more other polymers to the composition. This is true particularly for vinyl chloride polymers such as PVC.

A suitable combination of stabilizing additives is described in the British patent specification No. 1,582,280, comprising,

a. from 0.05% to 5% by weight based on the said composition of one or more sterically hindered amine derivatives,
b. from 0.05% to 5% by weight based on the said composition of one or more benzophenone derivatives, benzotriazoles, benzylidene malonates, phenyl salicylates or substituted acrylonitriles, and
c. from 0.005% to 5% by weight based on the said composition of one or more substituted phenol derivatives, organic phosphites or aromatic amines.

In a preferred embodiment of the present invention, the composition contains at least 50 wt-% of the copolymer. The amount of the saturated rubber and chlorinated polyethylene is likewise less than 50 wt-%. With these amounts an optimal impact resistance is obtained.

The polymer composition according to the invention is particularly suitable for making objects that are to satisfy high requirements as regards mechanical and physical properties such as impact resistance, rigidity, etc., especially if these properties are to be coupled with UV resistance.

The polymer composition is suitable for many applications. A wide range of impact-resistant objects can be made from it, such as tubes, bottles, furniture, dashboards for cars, cabinets and casings for electronic and domestic equipment, shoe heels, caravans, skis and surfboards.

Examples I through XIV and Comparative Examples a through e

Five polymer compositions were prepared from 75 parts by weight of styrene-acrylonitrile copolymer, 15 parts by weight of chlorinated polyethylene and 10 parts by weight of ethylene-propylene-ethylidene norbornene rubber. The nitrogen content of the copolymer was 6.9% and the viscosity number 0.64 dl/g (0.1 g in 100 ml acetone at +20°C). The EPT rubber applied had an ethylene content of 64 wt.% an ethylidene-norbornene content of 4 wt.% and a Hoekstra plasticity of 65.

Table 1 successively presents the number of the example, the chlorine content in wt.% of the CPE applied, the percentage of DSC crystallinity and the intrinsic viscosity of this CPE, the glass transition temperature in °C of this CPE, the notched impact strength (ASTM D 256) and the flexural modulus (ASTM D 790) of the polymer composition.

# 0 076 013

TABLE 1

| Example | % Cl | % Crystalline | [η] | $T_g$ (°C) | Izod kJ/m² | Flexural modulus (N/mm²) |
|---|---|---|---|---|---|---|
| I | 35.6 | 0 | 1.14 | – | 23.5±8.6 | 2310 |
| II | 35.8 | 5 | 1.25 | −16 | 37±5.9 | 2280 |
| III | 35.6 | 0 | 1.48 | −23 | 38±12.2 | 2270 |
| IV | 36.2 | 0 | 2.00 | −20 | 54±7.6 | 2270 |
| V | 36.7 | 0 | 2.35 | −24 | 58±3.4 | 2210 |
| a | 41.2 | 0 | 0.85 | −10 | 7±0.3 | 2350 |
| VI | 42.0 | 0 | 1.24 | −13 | 13±1.3 | 2330 |
| VII | 38.9 | 0 | 1.39 | – | 13±1.5 | 2210 |
| VIII | 42.6 | 0 | 2.22 | −17 | 39±7.8 | 2340 |

Starting from Example IV, some mixtures were prepared consisting of 75 parts by weight of SAN and 25 parts by weight of chlorinated polyethylene and rubber in varying proportions. The compositions and mechanical properties of these mixtures are given in Table 2.

TABLE 2

| Example | SAN (parts by weight) | CPE (parts by weight) | EPT (parts by weight) | Izod kJ/m² | Flexural modulus (N/mm²) |
|---|---|---|---|---|---|
| b | 75 | — | 25 | 2 | 1290 |
| IX | 75 | 7.5 | 17.5 | 13 | 2260 |
| X | 75 | 10 | 15 | 36 | 2230 |
| XI | 75 | 12.5 | 12.5 | 57 | 2270 |
| IV | 75 | 15 | 10 | 54 | 2270 |
| XII | 75 | 17.5 | 7.5 | 47 | 2350 |
| XIII | 75 | 20 | 5 | 45 | 2400 |
| XIV | 75 | 22.5 | 2.5 | 30 | 2440 |
| c | 75 | 25 | — | 8 | 2460 |

In Table 3 the influence of the chlorine content on the mechanical properties is indicated.

This table succesively presents the weight percentage of chlorine and the intrinsic viscosity of the chlorinated polyethylene as well as the impact resistance and the flexural modulus of the composition for two compositions containing 75 parts by weight of SAN, 15 parts by weight of CPE and 10 parts by weight of EPT.

5

TABLE 3

| Example | Cl content (wt.%) | [η] | Izod (kJ/m²) | Flexural modulus (N/mm²) |
|---|---|---|---|---|
| d | 29.2 | 1.37 | 6 | 2330 |
| e | 25.4 | 1.47 | 8 | 2200 |

**Claims for the Contracting States: BE, CH, DE, FR, GB, IT, LI, NL, SE**

1. Impact-resistant polymer composition on the basis of a copolymer of unsaturated nitrile, a substantially saturated rubber and a chlorinated polyethylene comprising:

a. 30—95 parts by weight of one or more polymers obtained by polymerizing a mixture of
   10—90 wt.% styrene and/or styrene derivatives, and
   90—10 wt. acrylonitrile and/or methacrylonitrile and
b. 5—70 parts by weight of
b.1. a rubber having less than 2 double bonds per 100 carbon atoms, and
b.2. chlorinated polyethylene with a chlorine content of between 32 and 45 wt.% and a DSC crystallinity of
   0—7%, the weight ratio between rubber and chlorinated polyethylene being between 2:1 and 1:10,
   characterized in that the chlorinated polyethylene used has an intrinsic viscosity of at least 1.0.

2. Polymer composition according to claim 1, characterized in that a copolymer of styrene and/or α-methylstyrene with acrylonitrile is used as copolymer of an unsaturated nitrile.
3. Polymer composition according to claim 1 or 2, characterized in that one or more rubbers from the group formed by butyl rubber, acrylate rubber, chlorobutyl rubber, ethylene-propylene and ethylene-propylene-diene rubber is chosen as saturated rubber.
4. Polymer composition according to one or more of the claims 1—3, characterized in that the intrinsic viscosity of the chlorinated polyethylene is between 1.2 and 3.5.
5. Polymer composition according to claim 1, characterized in that it consists of

a. 30—94.99 wt.% styrene-acrylonitrile copolymer and/or α-methylstyrene-acrylonitrile copolymer,
b.1. 2.5—35 wt.% ethylene-propylene, ethylene-propylene-diene rubber or butyl rubber
b.2. 2.5—35 wt.% chlorinated polyethylene,
c. 0.01—10 wt.% additives.

**Claims for the Contracting State: AT**

1. Process for the preparation of an impact-resistant polymer composition on the basis of a copolymer of unsaturated nitrile, a substantially saturated rubber and a chlorinated polyethylene prepared by mixing

a. 30—95 parts by weight of one or more polymers obtained by polymerizing a mixture of
   10—90 wt.% styrene and/or styrene derivatives, and
   90—10 wt. acrylonitrile and/or methacrylonitrile and
b. 5—70 parts by weight of
b.1. a rubber having less than 2 double bonds per 100 carbon atoms, and
b.2. chlorinated polyethylene with a chlorine content of between 32 and 45 wt.% and a DSC crystallinity of
   0—7%, the weight ratio between rubber and chlorinated polyethylene being between 2:1 and 1:10,
   characterized in that the chlorinated polyethylene used has an intrinsic viscosity of at least 1.0.

2. Process according to claim 1, characterized in that a copolymer of styrene and/or α-methylstyrene with acrylonitrile is used as copolymer of an unsaturated nitrile.
3. Process according to claim 1 or 2, characterized in that one or more rubbers from the group formed by butyl rubber, acrylate rubber, chlorobutyl rubber, ethylene-propylene and ethylene-propylene-diene rubber is chosen as saturated rubber.
4. Process according to one or more of the claims 1—3, characterized in that the intrinsic viscosity of the chlorinated polyethylene is between 1.2 and 3.5.
5. Process according to claim 1, characterized in that the composition is prepared from

a. 30—94.99 wt.% styrene-acrylonitrile copolymer and/or α-methylstyrene-acrylonitrile copolymer,
b.1. 2.5—35 wt.% ethylene-propylene, ethylene-propylene-diene rubber or butyl rubber
b.2. 2.5—35 wt.% chlorinated polyethylene,
c. 0.01—10 wt.% additives.

**Patentansprüche für die Vertragsstaaten: BE, CH, DE, FR, GB, IT, LI, NL, SE**

1. Eine schlagfeste Polymerzusammensetzung auf der Basis eines Copolymers eines ungesättigten Nitrils, eines im wesentlichen gesättigten Kautschuks und eines chlorierten Polyäthylens, hergestellt durch Vermischen von

a. 30—95 Gew.-Teilen eines oder mehrerer Polymerer, erhalten durch Polymerisation eines Gemisches von
10—90 Gew.-% Styrol und/oder Styrolderivaten und
90—10 Gew.-% Acrylnitril und/oder Methacrylnitril und
b. 5—70 Gew.-Teilen
b.1. eines Kautschuks mit weniger als 2 Doppelbindungen pro 100 Kohlenstoffatome und
b.2. eines chlorierten Polyäthylens mit einem Chlorgehalt zwischen 32 und 45 Gew.-% und einer DSC-Kristallinität von 0—7%, wobei das Gewichtsverhältnis zwischen Kautschuk und chloriertem Polyäthylen zwischen 2:1 und 1:10 liegt, dadurch gekennzeichnet, daß das eingesetzte chlorierte Polyäthylen eine grundmolare Viskosität von wenigstens 1,0 besitzt.

2. Zusammensetzung nach Anspruch 1, dadurch gekennzeichnet, daß als Copolymer eines ungesättigten Nitrils ein Copolymer von Styrol und/oder α-Methylstyrol mit Acrylnitril eingesetzt wird.

3. Zusammensetzung nach Anspruch 1 oder 2, dadurch gekennzeichnet, daß als gesättigter Kautschuk einer oder mehrere Kautschuke der Gruppe bestehend aus Butylkautschuk, Acrylatkautschuk, Chlorbutylkautschuk, Äthylen-Propylenkautschuk und Äthylen-Propylen-Dienkautschuk, eingesetzt wird.

4. Zusammensetzung nach einem oder mehreren der Ansprüche 1—3, dadurch gekennzeichnet, daß die grundmolare Viskosität des chlorierten Polyäthylens zwischen 1,2 und 3,5 liegt.

5. Zusammensetzung nach Anspruch 1, dadurch gekennzeichnet, daß die Zusammensetzung aus

a. 30—94,99 Gew.-% Styrol-Acrylnitrilcopolymer und/oder α-Methylstyrol-Acrylnitrilcopolymer,
b.1. 2,5—35 Gew.-% Äthylen-Propylenkautschuk, Äthylen-Propylen-Dienkautschuk oder Butylkautschuk,
b.2. 2,5—35 Gew.-% chloriertem Polyäthylen,
c. 0,01—10 Gew.-% Zusätzen, hergestellt wird.

**Patentansprüche für den Vertragsstaat: AT**

1. Verfahren zur Herstellung einer schlagfesten Polymerzusammensetzung auf der Basis eines Copolymers eines ungesättigten Nitrils, eines im wesentlichen gesättigten Kautschuks und eines. chlorierten Polyäthylens, hergestellt durch Vermischen von

a. 30—95 Gew.-Teilen eines oder mehrerer Polymerer, erhalten durch Polymerisation eines Gemisches von
10—90 Gew.-% Styrol und/oder Styrolderivaten und
90—10 Gew.-% Acrylnitril und/oder Methacrylnitril und
b. 5—70 Gew.-Teilen
b.1. eines Kautschuks mit weniger als 2 Doppelbindungen pro 100 Kohlenstoffatome und
b.2. eines chlorierten Polyäthylens mit einem Chlorgehalt zwischen 32 und 45 Gew.-% und einer DSC-Kristallinität von 0—7%, wobei das Gewichtsverhältnis zwischen Kautschuk und chloriertem Polyäthylen zwischen 2:1 und 1:10 liegt, dadurch gekennzeichnet, daß das eingesetzte chlorierte Polyäthylen eine grundmolare Viskosität von wenigstens 1,0 besitzt.

2. Verfahren nach Anspruch 1, dadurch gekennzeichnet, daß als Copolymer eines ungesättigten Nitrils ein Copolymer von Styrol und/oder α-Methylstyrol mit Acrylnitril eingesetzt wird.

3. Verfahren nach Anspruch 1 oder 2, dadurch gekennzeichnet, daß als gesättigter Kautschuk einer oder mehrere Kautschuke der Gruppe bestehend aus Butylkautschuk, Acrylatkautschuk, Chlorbutylkautschuk, Äthylen-Propylenkautschuk und Äthylen-Propylen-Dienkautschuk, eingesetzt wird.

4. Verfahren nach einem oder mehreren der Ansprüche 1—3, dadurch gekennzeichnet, daß die grundmolare Viskosität des chlorierten Polyäthylens zwischen 1,2 und 3,5 liegt.

5. Verfahren nach Anspruch 1, dadurch gekennzeichnet, daß die Zusammensetzung aus

a. 30—94,99 Gew.-% Styrol-Acrylnitrilcopolymer und/oder α-Methylstyrol-Acrylnitrilcopolymer,
b.1. 2,5—35 Gew.-% Äthylen-Propylenkautschuk, Äthylen-Propylen-Dienkautschuk oder Butylkautschuk,
b.2. 2,5—35 Gew.-% chloriertem Polyäthylen,
c. 0,01—10 Gew.-% Zusätzen, hergestellt wird.

**Revendications pour les Etats Contractants: BE, CH, DE, FR, GB, IT, LI, NL, SE**

1. Composition polymère résistant au choc à base d'un copolymère d'un nitrile insaturé, un caoutchouc sensiblement saturé et un polyéthylène chloré comprenant

**0 076 013**

a. 30 à 95 parties pds d'un ou plusieurs polymères qu'on obtient en polymérisant un mélange de
   10 à 90% pds de styrène et/ou dérivés de styrène, et
   90 à 10% d'acrylonitrile et/ou de méthacrylonitrile et
b. 5 à 70 parties pds de
b.1. un caoutchouc comportant moins de 2 doubles liaisons par 100 atomes de carbone, et
b.2. un polyéthylène chloré ayant une teneur en chlore de 32 à 45% pds, une cristallinité CED de 0 à 7%, le rapport pondéral entre le caoutchouc et le polyéthylène chloré étant de 2:1 à 1:10, caractérisée en ce que le polyéthylène chloré utilisé présente une viscosité intrinsèque d'au moins 1:10.

2. Composition polymère selon la revendication 1, caractérisée en ce qu'on utilise comme copolymère d'un nitrile insaturé un copolymère de styrène et/ou α-méthylstyrène avec l'acrylonitrile.

3. Composition polymère selon la revendication 1 ou 2, caractérisée en ce qu'on choisit comme caoutchouc saturé un ou plusieurs caoutchoucs du groupe formé par le caoutchouc butyle, le caoutchouc acrylate, le caoutchouc chlorobutyle, le caoutchouc éthylène/propylène et éthylène/propylène/diène.

4. Composition polymère selon une ou plusieurs des revendications 1 à 3, caractérisé en ce que la viscosité intrinsèque du polyéthylène chloré est entre 1,2 et 3,5.

5. Composition polymère selon la revendication 1, caractérisée en ce qu'elle consiste

a. 30 à 94,99% pds d'un copolymère styrène/acrylonitrile et/ou un copolymère α-méthylstyrène/acrylo-nitrile,
b.1. 2,5 à 35% pds de caoutchouc éthylène/propylène, éthylène/propylène/diène ou de caoutchouc butyle,
b.2. 2,5 à 35% pds de polyéthylène chloré,
c. 0,01 à 10% pds d'additif.

**Revendications pour l'Etat Contractant: AT**

1. Procédé de préparation d'une composition polymère résistant au choc, à base d'un copolymère d'un nitrile insaturé, un catouchouc sensiblement saturé et un polyéthylène chloré, qu'on prépare en mélangeant

a. 30 à 95 parties pds d'un ou plusieurs polymères qu'on obtient en polymérisant un mélange de
   10 à 90% pds de styrène et/ou dérivés de styrène, et
   90 à 10% d'acrylonitrile et/ou de méthacrylonitrile et
b. 5 à 70 parties pds de
b.1. un caoutchouc comportant moins de 2 doubles liaisons par 100 atomes de carbone, et
b.2. un polyéthylène chloré ayant une teneur en chlore de 32 à 45% pds, une cristallinité CED de 0 à 7%, le rapport pondéral entre le caoutchouc et le polyéthylène chloré étant de 2:1 à 1:10, caractérisé en ce que le polyéthylène chloré utilisé présente une viscosité intrinsèque d'au moins 1,0.

2. Procédé selon la revendication 1, caractérisé en ce qu'on utilise un copolymère de styrène et/ou α-méthylstyrène avec l'acrylonitrile à titre de copolymère d'un nitrile insaturé.

3. Procédé selon la revendication 1 ou 2, caractérisé en ce qu'on choisit comme caoutchouc saturé un ou plusieurs caoutchoucs du groupe formé par le caoutchouc butyle, le caoutchouc acrylate, le caoutchouc chlorobutyle, le caoutchouc éthylène/propylène et éthylène/propylène/diène.

4. Procédé selon une ou plusieurs des revendications 1 à 3, caractérisé en ce que la viscosité intrinsèque du polyéthylène chloré est de 1,2 à 3,5.

5. Procédé selon la revendication 1, caractérisé en ce qu'on prépare la composition à partir de

a. 30 à 94,99% pds d'un copolymère styrène/acrylonitrile et/ou un copolymère α-méthylstyrène/acrylo-nitrile,
b.1. 2,5 à 35% pds de caoutchouc éthylène/propylène, éthylène/propylène/diène ou de caoutchouc butyle
b.2. 2,5 à 35% pds de polyéthylène chloré
c. 0,01 à 10% pds d'additif.